# EUROPÄISCHE PATENTSCHRIFT

(11) **EP 2 430 900 B1**
(45) Veröffentlichungstag und Bekanntmachung des Hinweises auf die Patenterteilung: **25.02.2015**
(21) Anmeldenummer: 11173385.3
(22) Anmeldetag: 11.07.2011
(51) Int. Cl.: A01D 34/83, A01D 34/835

(54) **Vorsatzgerät**
Header
Plateforme de coupe

(30) Priorität: 21.09.2010 DE 102010037667
(43) Veröffentlichungstag der Anmeldung: 21.03.2012
(73) Patentinhaber: CLAAS Selbstfahrende Erntemaschinen GmbH, 33428 Harsewinkel (DE)
(72) Erfinder: Roberg, Alfons, 33428 Harsewinkel (DE)

(56) Entgegenhaltungen:
- DE-A1-102005 025 319
- DE-A1-102006 051 619
- FR-A- 1 325 752
- GB-A- 1 471 913
- US-A- 3 561 202
- US-A- 3 681 901
- US-A- 5 430 998

## Beschreibung

Die vorliegende Erfindung betrifft ein Vorsatzgerät zum Ernten von stängelartigem Erntegut für eine selbstfahrende Erntemaschine gemäß dem Oberbegriff des Anspruches 1.

Die gattungsbildende EP 1 629 707 A1 beschreibt ein Vorsatzgerät für eine selbstfahrenden Erntemaschine mit einer Schneidvorrichtung zum Abtrennen von stängelartigem Erntegut sowie einer als Einzugsschnecke ausgebildeten Fördereinrichtung zur Abförderung des abgetrennten Erntegutes zu einer Einzugsvorrichtung der Erntemaschine. Die Schneidvorrichtung weist zwei über jeweils einen Mähmesserantriebsstrang angetriebene Mähbalkenabschnitte auf, die von dem Mähmesserantriebsstrang oszillierend angetrieben werden. Der oszillierende Antrieb der Mähbalkenabschnitte führt in den Punkten der Bewegungsrichtungsumkehr zum Auftreten großer Querbeschleunigungskräfte auf Grund der Massenträgheit der Mähbalkenabschnitte.

Aufgabe der vorliegenden Erfindung ist es daher, ein Vorsatzgerät der eingangs genannten Art derart weiterzubilden, dass das Auftreten von Querbeschleunigungen an der mindestens einen Schneidvorrichtung vermieden wird.

Die US 3 561 202 A offenbart ein Vorsatzgerät mit einer endlos umlaufenden Schneidvorrichtung gemäß dem Oberbegriff des Anspruches 1.

Die Aufgabe wird erfindungsgemäß durch die kennzeichnenden Merkmale des Anspruches 1 gelöst.

Vorteilhafte Weiterbildungen der Erfindung sind Gegenstand der Unteransprüche. Die endlos umlaufende Schneidvorrichtung bedarf keines reversierenden Antriebes, so dass das Auftreten von Querbeschleunigungskräften in den Umkehrpunkten auf Grund der Massenträgheit der Schneidvorrichtung vermieden wird. Darüber hinaus zeichnet sich eine derartige Schneidvorrichtung eines Vorsatzgerätes durch ein geringeres Gewicht aus, als die aus dem Stand der Technik bekannten Mähbalkenabschnitte. Ein weiterer Vorteil, der sich aus dem geringeren Gewicht und dem Wegfall der Bewegungsrichtungsumkehr ergibt, besteht darin, dass das Vorsatzgerät von der selbstfahrenden Erntemaschine mit einer höhere Geschwindigkeit über ein Feld bewegt werden kann, da die Schneidvorrichtung mit höheren Geschwindigkeiten betreibbar ist.

Erfindungsgemäß ist das Schneidelement als ein Befestigungselement mit einem daran angeordneten, mit einer hartstoffkörperhaltigen Beschichtung versehenen Schneidzahn ausgeführt. Das Befestigungselement trägt den Schneidzahn und dient dessen Halterung und Führung in einer zu der Umlaufrichtung des Trägerelementes parallelen Ebene. Für die Befestigung des Schneidelementes an dem einen zylindrischen Querschnitt aufweisenden Trägerelement, welches insbesondere als ein Seil aus einem hochfesten Kunststoff oder aus Metall ausgeführt ist, weist das Befestigungselement einen hohlzylindrischen Abschnitt auf, der eine konzentrische Anordnung an dem Trägerelement ermöglicht.

Um die Führung des Schneidelementes mit Schneidzahn zu erreichen, kann das Befestigungselement zumindest abschnittsweise mit den Umlenkelementen formschlüssig in Eingriff stehen. Durch den zumindest abschnittsweise formschlüssigen Eingriff des Befestigungselementes mit den Umlenkelementen wird eine Führung des jeweiligen Schneidzahnes in einer definierten Ebene erreicht. In bevorzugter Weiterbildung kann mindestens eine Führungsleiste zwischen den Umlenkelementen und parallel zu dem Trägerelement an der dem abzutrennenden Erntegut zugewandten Seite des Vorsatzgerätes angeordnet, mit welcher das Befestigungselement formschlüssig in Eingriff stehen kann. Auf diese Weise wird der Schneidzahn in dem Bereich zwischen den Umlenkelementen zusätzlich in einer definierten Ebene gehalten, um das gleichmäßige Abtrennen des Erntegutes zu ermöglichen.

Die hartkörperhaltige Beschichtung ist als eine Hartmetallschicht ausgeführt, die Diamantkörner und/ oder Keramikpartikel enthält.

Vorzugsweise kann das zumindest eine Paar Umlenkelemente auf der dem Boden zugewandten Unterseite des Vorsatzgerätes angeordnet sein.

Dabei kann die mindestens eine Schneidvorrichtung in einer im Wesentlichen horizontalen Ebene liegend, der Fördereinrichtung vorgelagert, an dem Vorsatzgerät angeordnet sein. Bei dieser Anordnung der Schneidvorrichtung am Vorsatzgerät handelt es sich um die klassische Positionierung der Schneidvorrichtung anstelle eines konventionellen Mähbalkenabschnittes an einem Schneidwerk.

In einer bevorzugten Weiterbildung des Vorsatzgerätes kann die Schneidvorrichtung um eine horizontale Achse rotierbar auf der dem Boden zugewandten Unterseite des Vorsatzgerätes angeordnet sein. Diese Anordnung ermöglicht den Einsatz an Vorsatzgeräten, die beispielsweise speziell für die Mais- oder Sonnenblumenernte vorgesehen sind, so genannten Maispflückern. Eine derart an einem für die Mais- oder Sonnenblumenernte vorgesehenen Vorsatzgerät angeordnete Schneidvorrichtung dient dazu, den konventionellen Unterflurhäcksler zu ersetzen.

In bevorzugter Weiterbildung kann darüber hinaus eine zweite Schneidvorrichtung in einer um einen Winkel zu der Schnittebene der ersten Schneidvorrichtung geneigten, der Fördereinrichtung nachgelagerten Position an dem Vorsatzgerät angeordnet sein. Die zweite Schneidvorrichtung kommt beim Hochschnitt von Erntegut zum Einsatz.

Hierzu kann die zweite Schneidvorrichtung mehrere zueinander parallele Ebenen aufweisen, über die ein endlos umlaufendes Trägerelement durch mehrere, paarweise in einer Ebene angeordnete Umlenkelemente führ- und antreibbar ist.

Die Erfindung wird nachstehend anhand von in den Zeichnungen dargestellten Ausführungsbeispielen näher erläutert.

Die zugehörigen Zeichnungen zeigen:
- Fig. 1: eine Seitenansicht eines schematisiert dargestellten Schneidwerkes mit einer Schneidvorrichtung;
- Fig. 1A: eine Detailansicht eines nicht erfindungsgemäßen Schneidelementes der Schneidvorrichtung gemäß Fig. 1;
- Fig. 2: eine Seitenansicht einer zweiten Ausführungsform des schematisiert dargestellten Schneidwerkes gemäß Fig. 1;
- Fig. 3: eine Detailansicht einer Schneidvorrichtung gemäß Fig. 2;
- Fig. 4: eine schematisierte Darstellung einer dritten Ausführungsform des Schneidwerkes gemäß Fig. 1;
- Fig. 5: eine Detailansicht einer erfindungsgemäßen Ausführungsform eines Schneidelementes gemäß Fig. 1;
- Fig. 6: eine schematisierte Darstellung einer Ausführungsform einer Schneidvorrichtung als Unterflurhäckselvorrichtung für einen Maispflücker.

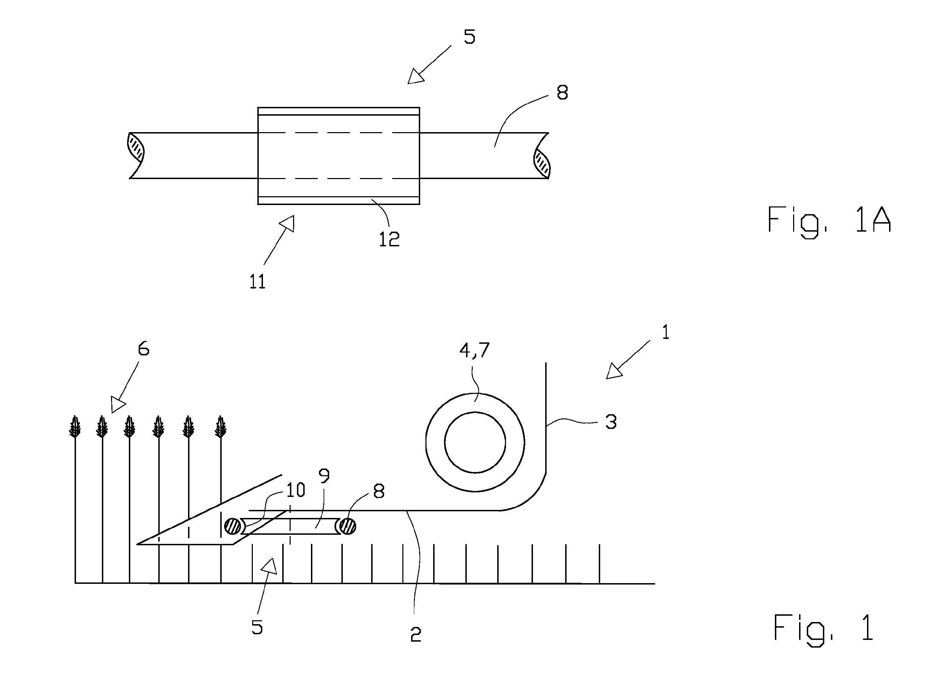

Die schematisierte Darstellung in Fig. 1 zeigt eine Seitenansicht eines Schneidwerkes 1 für eine selbstfahrende Erntemaschine, insbesondere einen Mähdrescher, welches an einem Schrägförderer des Mähdreschers lösbar angeordnet ist. Das Schneidwerk 1 weist einen Schneidtisch 2 mit einer Schneidwerksmulde auf, die an beiden Enden jeweils mit einer Seitenwand versehen ist. Zwischen den Seitenwänden erstreckt sich eine vertikal zur Schneidwerksmulde angeordnete Rückwand 3. Oberhalb der Schneidwerksmulde ist annähernd bündig zwischen den Seitenwänden mindestens eine Fördereinrichtung 4 angeordnet, die als eine rotierend angetriebene Einzugsschnecke 7 ausgeführt ist. Die Fördereinrichtung 4 fördert abgetrenntes stängelartiges Erntegut 6 in Richtung des Einzugkanals des Mähdreschers. Das stängelartige Erntegut 6 wird von mindestens einer unterhalb des Schneidtisches 2 angeordneten, sich im Wesentlichen parallel zur Längsachse des Schneidtisches 2 erstreckenden Schneidvorrichtung 5 abgetrennt. Oberhalb des Schneidtisches 2 ist vor der als Einzugsschnecke ausgeführten Fördereinrichtung 4 eine rotierend angetriebene, höhenverstellbare an sich bekannte und daher nicht dargestellte Haspel angeordnet, mit der das Erntegut über die Schneidvorrichtung 5 in Richtung der Schneidwerksmulde umgelenkt wird.

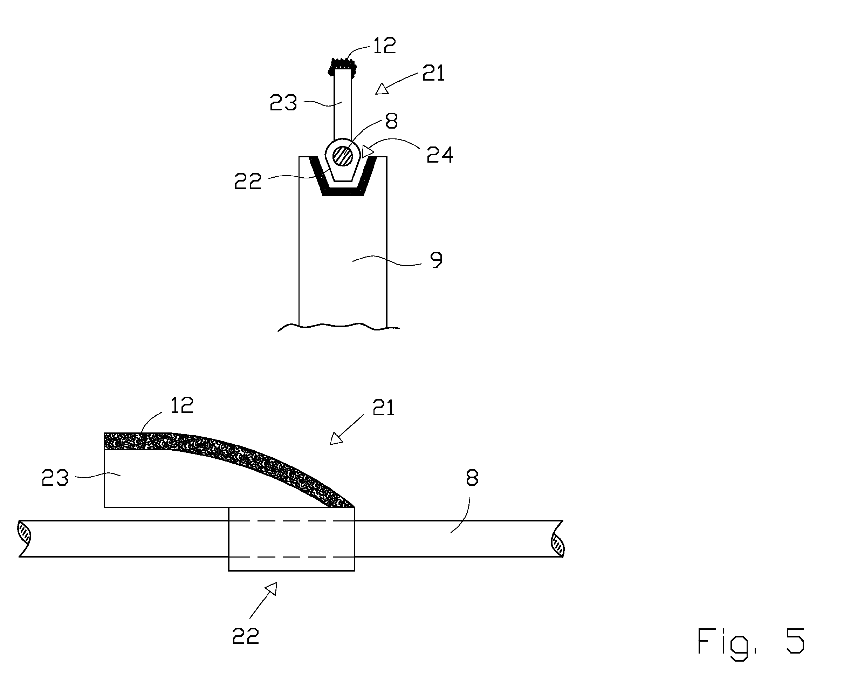

Die Schneidvorrichtung 5 ist erfindungsgemäß als zumindest ein endlos umlaufendes, einen zylindrischen Querschnitt aufweisendes Trägerelement 8 ausgeführt, welches gemäß Fig. 5 mindestens ein Schneidelement 21 mit einer hartstoffkörperhaltigen Beschichtung 12 aufweist. Der Antrieb und die Führung der Schneidvorrichtung 5 erfolgt durch zumindest ein Paar Umlenkelemente 9, welche ebenfalls unterhalb des Schneidtisches 2 an dem Schneidwerk 1 in einer horizontalen Ebene liegend angeordnet sind. Der Antrieb der Schneidvorrichtung 5 kann hydraulisch, elektrisch oder mechanisch, vorzugsweise in Form eines Riemenantriebes, erfolgen.

Das endlos umlaufende Trägerelement 8 ist als ein Seil, vorzugsweise als ein Drahtseil ausgeführt, welches mit einer Vielzahl Schneidelemente 21 bestückt ist, welche konzentrisch zur Längsachse des Trägerelementes 8 auf diesem mit einem geringfügigen Abstand hintereinander aufgereiht angeordnet sind. Die Schneidelemente 21 weisen eine hartstoffkörperhaltige Beschichtung 12 auf, welche Diamantkörner und/oder Keramikpartikel beinhaltet und als eine Hartmetallschicht ausgeführt ist. Das als Drahtseil ausgeführte Trägerelement 8 mit den darauf angeordneten Schneidelementen 21 liegt formschlüssig in einer mit dem Querschnitt der Schneidelemente 21 korrespondierenden Ausnehmung 10,24 des Umlenkelementes 9 an.

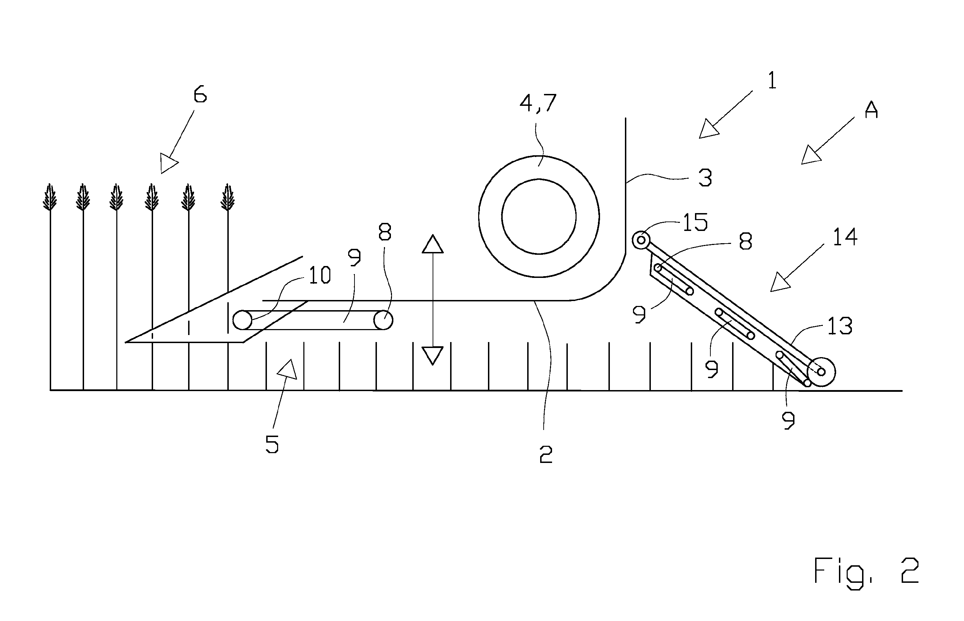

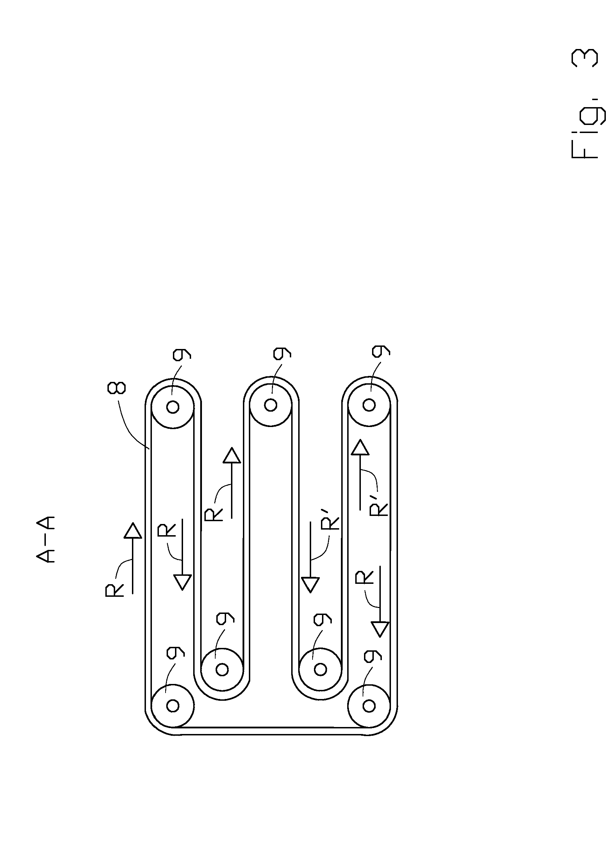

Die schematisierte Darstellung in Fig. 2 zeigt eine Seitenansicht einer zweiten Ausführungsform des Schneidwerkes 1 gemäß Fig. 1. Dabei ist an dem Schneidwerk 1 eine zweite Schneidvorrichtung 14 angeordnet, welche im Hochschnittverfahren zum Einsatz kommen kann. Die zweite Schneidvorrichtung 14 ist an der Rückwand 3 des Schneidwerkes 1 um eine horizontale Schwenkachse 15 schwenkbar angelenkt, so dass die zweite Schneidvorrichtung 14 unter einem Winkel zur Schneidebene der ersten Schneidvorrichtung 5 geneigt geführt ist. Die zweite Schneidvorrichtung 14 unterscheidet sich von der ersten Schneidvorrichtung 5 dadurch, dass das als Drahtseil ausgeführte endlose Trägerelement 8 über mehrere, in vertikaler Richtung gesehen in mehreren horizontalen Ebenen liegenden Umlenkelementen 9 geführt wird, was in Fig. 3 im Detail näher veranschaulicht ist, und die in einem Rahmen 13 angeordnet sind. Die erste Schneidvorrichtung 5 trennt das Erntegut knapp unterhalb der Fruchtstände ab, so dass längere Stoppeln auf dem Feld stehenbleiben. Diese längeren Stoppeln werden von der der ersten Schneidvorrichtung 5 in Bewegungsrichtung des Schneidwerkes 1 nachgeordneten zweiten Schneidvorrichtung 14, die mehrere sich in vertikaler Richtung erstreckende Schnittebenen aufweist, wie in Fig. 3 dargestellt ist, abgetrennt.

Die Darstellung in Fig. 3 zeigt eine schematisierte Detailansicht der zweiten Schneidvorrichtung 14 in einer Draufsicht gemäß Pfeilrichtung A. Das endlose Trägerelement 8 ist in vertikaler Richtung gesehen bei einem Übergang von einer Ebene zur nächst höheren Ebene schlingenförmig um die Umlenkelemente 9 geführt, wodurch in jeder Ebene gegenüber der vorherigen Ebene eine Richtungsumkehr des endlos umlaufenden Trägerelementes 8 der zweiten Schneidvorrichtung 14 erreicht wird, wie durch die Richtungspfeile R veranschaulicht ist.

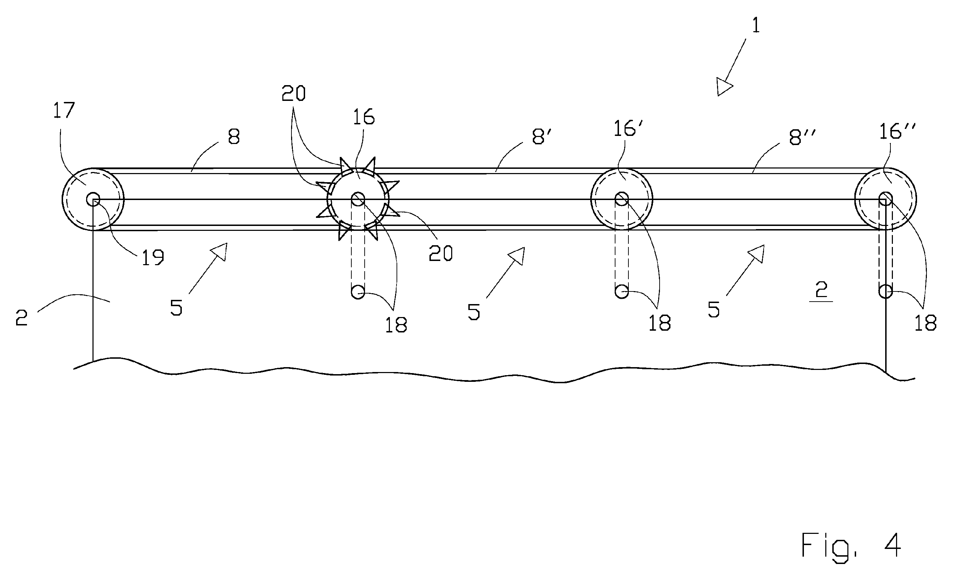

In Fig. 4 ist eine zweite Ausführungsform eines als Schneidwerk 1 ausgeführten Vorsatzgerätes gemäß Fig. 1 dargestellt. Hierbei sind mehrere Schneidvorrichtungen 5 sich über die Breite des Schneidwerkes 1 erstreckend nebeneinander angeordnet. Um die Zugspannung der Trägerelemente 8 der Schneideinrichtungen 5 aufrecht zu erhalten, weist das Schneidwerk 1 auf einer Außenseite ein ortsfestes Umlenkelement 17 auf, welches als Antriebs- und Führungsmittel der Schneidvorrichtungen 5 dient und, bezogen auf den Schneidtisch 2, ortsfest an einer Drehachse 19 angeordnet ist. In Längsrichtung des Schneidwerkes 1 gesehen sind weitere Umlenkelemente 16, 16', 16" beabstandet zueinander angeordnet, die jeweils um eine vertikale Achse 18 parallel und relativ zum Schneidwerkstisch 2 verschiebbar sind. Ausgehend von dem ortsfesten Umlenkelement 17 sind mehrere endlos umlaufende Trägerelemente 8, 8', 8" vorgesehen, die jeweils zwei benachbarte Umlenkelemente 17, 16; 16', 16" umschließen. Ein erstes Trägerelement 8 umschließt das ortfeste Umlenkelement 17 sowie das erste verschwenkbare Umlenkelement 16. Das zweite Trägerelement 8' umschließt das erste verschiebbare Umlenkelement 16 und das hierzu benachbarte zweite verschiebbare Umlenkelement 16'. Diese Art der Anordnung der Trägerelemente 8, 8', 8" setzt sich über die gesamte Breite des Schneidwerkes 1 fort. Die Anzahl der beweglichen Umlenkelemente 16, 16', 16" richtet sich nach der Gesamtbreite des Schneidewerkes 1. Den verschiebbaren Umlenkelementen 16, 16', 16" kommt die Aufgabe zu, die endlos umlaufenden Trägerelemente 8, 8', 8" zu spannen, um das jeweilige Trägerelement 8, 8', 8" in Längsrichtung des Schneidwerkes 1 gesehen hintereinander zu führen und anzutreiben. Das Trägerelement 8 ist gegenüber dem nachfolgenden Trägerelement 8' in vertikaler Richtung gesehen versetzt zu diesem angeordnet, um Überschneidungen der Trägerelemente 8, 8' beziehungsweise 8', 8" zu vermeiden. Somit überträgt das erste Trägerelement 8 die Drehzahl des angetriebenen ortsfesten Umlenkelementes 17 auf das nächste verschiebbare Umlenkelement 16. Diese vertikal versetzte Anordnung setzt sich über die Breite des Schneidwerkes 1 fort, so dass das verschiebbare Umlenkelement 16 über das Trägerelement 8' das nachfolgende Umlenkelement 16' antreibt. Um in den Bereichen, in denen zwei Trägerelemente 8, 8'; 8', 8"einander überlappend an einem beweglichen Umlenkelement 16, 16' angeordnet sind, Einbußen beim Abtrennen des Erntegutes 6 zu vermeiden, können zumindest die zwischen den äußeren Enden des Schneidwerkes 1 angeordneten Umlenkelemente 16, 16' ihrerseits mit zusätzlichen Messern 20 ausgestattet sein, die mit den Umlenkelementen 16, 16' rotieren. Fig. 5 stellt eine Detailansicht einer Ausführungsform eines Schneidelementes 21 dar. Das im Detail dargestellte, konzentrisch zu der Längsachse des Trägerelementes 8 angeordnete Schneidelement 21 umfasst ein hohlzylindrisches Befestigungselement 22, mit welchem das Schneidelement 21 an dem Trägerelement 8 befestigbar ist. Weiterhin umfasst das Schneidelement 21 einen zumindest abschnittsweise mit einer hartstoffkörperhaltigen Beschichtung 12 versehenen Schneidzahn 23. Der Schneidzahn 23 weist eine sich in Längsrichtung des Trägerelementes 8 erstreckende, im Wesentlichen dreieckförmige Kontur auf. Zumindest eine die Schneidkante bildende, von dem Befestigungselement 22 ausgehend ansteigende Außenkante ist mit einer hartstoffkörperhaltigen Beschichtung 12 versehen. Um eine Führung des mit dem endlos umlaufenden Trägerelement 8 umlaufenden Schneidelementes 21 in einer gleichbleibenden Ebene zu erreichen, ist das Befestigungselement 22 auf seiner dem Umlenkelement 9 zugewandten Seite kegelstumpfförmig ausgeführt. Das kegelstumpfförmige Befestigungselement 22 wird in einer mit der Form des Befestigungselementes 22 korrespondierenden, im Wesentlichen V-förmigen Ausnehmung 24 des Umlenkelementes 9 formschlüssig gehalten und von dieser geführt. Das Befestigungselement 22 sowie die Ausnehmung 24 des Umlenkelementes 9 bestehen in ihren einander zugewandten Führungsflächen aus einer Materialpaarung, etwa eines Kunststoffes einerseits und eines Metalls andererseits.

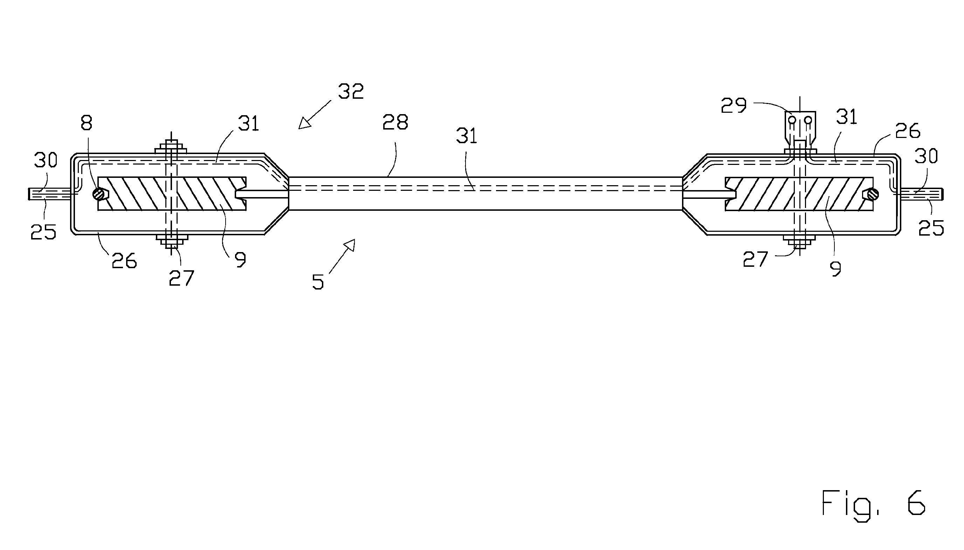

Die Darstellung in Fig. 6 zeigt eine schematisierte Ansicht einer weiteren Ausführungsform der Schneideinrichtung 5 als eine Unterflurhäckseleinrichtung eines nicht dargestellten an sich bekannten sogenannten Maispflückers. Die Schneidvorrichtung 5 weist zumindest ein endlos umlaufendes, einen zylindrischen Querschnitt aufweisendes Trägerelement 8 auf, welches mindestens ein Schneidelement 11 gemäß Fig. 1A mit einer hartstoffkörperhaltigen Beschichtung umfasst, wobei die Schneidvorrichtung 5 um eine horizontale Achse verschwenkbar auf der Unterseite des Maispflückers angeordnet ist. Zur schwenkbaren Lagerung der Schneidvorrichtung 5 sowie zu deren Antrieb ist eine Haltevorrichtung 32 vorgesehen, die endseitig jeweils eine Lagerwelle 25 aufnimmt, um die die Haltevorrichtung 32 verschwenkbar am Maispflücker zu lagern ist. An die jeweilige Lagerwelle 25 schließt sich ein im Wesentlichen C-förmiges Rahmenelement 26 an, in welchem das Umlenkelement 9 um eine vertikale Achse 27 drehbar gelagert ist.

Die Rahmenelemente 26 sind miteinander durch eine Strebe 28 miteinander verbunden. Das jeweilige Rahmenelement 26 ist auf seinen einander gegenüberliegenden Seiten offen ausgeführt, so dass das Umlenkelement 9 sowie das Trägerelement 8 frei um die Strebe 28 umlaufen können. Für den Antrieb zumindest eines der Umlenkelemente 9 ist die vertikale Achse 27 mit einem Hydromotor 29 versehen, der aus einem an der selbstfahrenden Erntemaschine vorgesehenen Hydraulikkreislauf gespeist wird. Das Hydrauliköl wird durch eine Drehdurchführung 30 in der jeweiligen Lagerwelle 25 sowie eine Hydraulikleitung 31 in dem Rahmenelement 26 dem Hydromotor 29 zugeführt. Das Hydrauliköl strömt vom Hydromotor 29 weiter über eine in der Strebe 28 und dem sich daran anschließenden weiteren C-förmigen Rahmenelement 26 vorgesehene Hydraulikleitung 31 zum Hydraulikkreislauf der selbstfahrenden Erntemaschine zurück.

### Bezugszeichenliste

| | | | |
|---|---|---|---|
| 1 | Schneidwerk | 21 | Schneidelement |
| 2 | Schneidtisch | 22 | Befestigungselement |
| 3 | Rückwand | 23 | Schneidzahn |
| 4 | Fördereinrichtung | 24 | V-förmige Ausnehmung |
| 5 | Schneidvorrichtung | 25 | Lagerwelle |
| 6 | Erntegut | 26 | Rahmenelement |
| 7 | Einzugsschnecke | 27 | vertikale Achse |
| 8 | Trägerelement | 28 | Strebe |
| 8' | Trägerelement | 29 | Hydromotor |
| 8" | Trägerelement | 30 | Drehdurchführung |
| 9 | Umlenkelement | 31 | Hydraulikleitung |
| 10 | Ausnehmung | 32 | Haltevorrichtung |
| 11 | Schneidelement | | |
| 12 | Beschichtung | | |
| 13 | Rahmen | | |
| 14 | zweite Schneidvorrichtung | | |
| 15 | Horizontale Schwenkachse | | |
| 16 | ortsveränderliches Umlenkelement | | |
| 16' | ortsveränderliches Umlenkelement | | |
| 16" | ortsveränderliches Umlenkelement | | |
| 17 | ortsfestes Umlenkelement | | |
| 18 | Vertikale Achse | | |
| 19 | Drehachse | | |
| 20 | Messer | | |

## Patentansprüche

1. Vorsatzgerät (1) zum Ernten von stängelartigem Erntegut (6) für eine selbstfahrende Erntemaschine, welches mindestens eine Schneidvorrichtung (5, 14) zum Abtrennen des stängelartigen Erntegutes (6) sowie mindestens eine Querfördereinrichtung (4, 7) zur Abförderung des abgetrennten Erntegutes zu einer Einzugsvorrichtung der Erntemaschine aufweist,
wobei
die mindestens eine Schneidvorrichtung (5, 14) als zumindest ein endlos umlaufendes Trägerelement (8, 8', 8") ausgeführt ist, welches mindestens ein Schneidelement ( 21) mit
einer hartstoffkörperhaltigen Beschichtung (12) aufweist, wobei das Vorsatzgerät (1) zumindest ein Paar Umlenkelemente (9, 9', 9") umfasst, die dem Antrieb und der Führung der mindestens einen Schneidvorrichtung (5, 14) dienen, **dadurch gekennzeichnet, dass** das Trägerelement einen zylindrischen Querschnitt aufweist, dass das Schneidelement ( 21) einen hartstoffkörperhaltig beschichteten Schneidzahn (23) und ein hohlzylindrisches Befestigungselement (22) aufweist, welches auf seiner den Umlenkelementen (9" 9', 9") zugewandten Seite kegelstumpfförmig ausgeführt ist und dass die hartstoffkörperhaltige Beschichtung als Hartmetallschicht ausgeführt ist, die Diamantkörner und/oder Keramikpartikel enthält.

2. Vorsatzgerät (1) nach Anspruch 1,
**dadurch gekennzeichnet, dass** das Befestigungselement (22) zumindest abschnittsweise formschlüssig mit den Umlenkelementen (9) in Eingriff steht.

3. Vorsatzgerät (1) nach einem der Ansprüche 1 oder 2, **dadurch gekennzeichnet, dass** das zumindest eine Paar Umlenkelemente (9) auf der dem Boden zugewandten Seite des Vorsatzgerätes (1) angeordnet ist.

4. Vorsatzgerät (1) nach Anspruch 3, **dadurch gekennzeichnet, dass** die mindestens eine Schneidvorrichtung (5) in einer im Wesentlichen horizontalen Ebene liegend, der Fördereinrichtung (4, 7) vorgelagert, an dem Vorsatzgerät (1) angeordnet ist.

5. Vorsatzgerät (1) nach einem der Ansprüche 1 oder 4, **dadurch gekennzeichnet, dass** die Schneidvorrichtung (5) um eine horizontale Achse rotierbar an dem Vorsatzgerät (1) angeordnet ist.

6. Vorsatzgerät (1) nach Anspruch 1, **dadurch gekennzeichnet, dass** eine zweite Schneidvorrichtung (14) in einer um einen Winkel zu der Schnittebene der ersten Schneidvorrichtung (5) geneigten, der Fördereinrichtung nachgelagerten Position an dem Vorsatzgerät (1) angeordnet ist.

7. Vorsatzgerät (1) nach Anspruch 6, **dadurch gekennzeichnet, dass** die zweite Schneidvorrichtung (14) mehrere zueinander parallele Ebenen aufweist, über die mindestens ein endlos umlaufendes Trägerelement (8) durch mehrere, paarweise in einer Ebene angeordnete Umlenkelemente (9) führ- und antreibbar ist.

## Claims

1. A front attachment (1) for harvesting stalk-type crop material (6) for a self-propelled harvester, which has at least one cutting device (5, 14) for cutting off the stalk-like crop material (6) and at least one transverse conveyor device (4, 7) for conveying away the cut-off crop material to an intake device of the harvester, wherein the at least one cutting device (5, 14) is in the form of at least one endlessly circulating carrier element (8, 8', 8") which has at least one cutting element (21) with a coating (12) containing hard material bodies, wherein the front attachment (1) has at least one pair of deflection elements (9, 9', 9") which serve for driving and guiding the at least one cutting device (5, 14), **characterised in that** the carrier element is of a cylindrical cross-section and the cutting element (21) has a cutting tooth (23) with a coating containing hard material bodies, and a hollow-cylindrical fixing element (22) which is of a frustoconical configuration on its side facing towards the deflection elements (9, 9', 9") and the coating containing hard material bodies is in the form of a hard metal layer which contains diamond grains and/or ceramic particles.

2. A front attachment (1) according to claim 1 **characterised in that** the fixing element (2) is at least portion-wise in positively locking engagement with the deflection elements (9).

3. A front attachment (1) according to one of claims 1 and 2 **characterised in that** the at least one pair of deflection elements (9) is arranged on the side of the front attachment (1), that is towards the ground.

4. A front attachment (1) according to claim 3 **characterised in that** the at least one cutting device (5) is arranged on the front attachment (1), disposed in a substantially horizontal plane, in front of the conveyor device (4, 7).

5. A front attachment (1) according to one of claims 1 and 4 **characterised in that** the cutting device (5) is arranged on the front attachment (1) rotatably about a horizontal axis.

6. A front attachment (1) according to claim 1 **characterised in that** a second cutting device (14) is arranged on the front attachment (1) in a position which is inclined through an angle relative to the cutting plane of the first cutting device (5) and which is downstream of the conveyor device.

7. A front attachment (1) according to claim 6 **characterised in that** the second cutting device (14) has a plurality of mutually parallel planes, by way of which at least one endlessly circulating carrier element (8) can be guided and driven by a plurality of deflection elements (9) arranged in paired relationship in a plane.

## Revendications

1. Outil frontal (1) destiné à récolter du produit de récolte en tiges (6) pour une machine de récolte automotrice, lequel comprend au moins un dispositif de coupe (5, 14) pour sectionner le produit de récolte en tiges (6) ainsi qu'au moins un dispositif de convoyage transversal (4, 7) pour convoyer le produit de récolte sectionné vers un dispositif d'alimentation de la machine de récolte, le au moins un dispositif de coupe (5, 14) étant conformé en au moins un élément porteur à défilement continu (8, 8', 8") qui comporte au moins un élément de coupe (21) avec un revêtement contenant des corps en matière dure (12), l'outil frontal (1) comprenant au moins une paire d'éléments déflecteurs (9, 9', 9") qui servent à entraîner et à guider le au moins un dispositif de coupe (5, 14), **caractérisé en ce que** l'élément porteur présente une section transversale cylindrique, **en ce que** l'élément de coupe (21) comporte une dent de coupe (23), avec un revêtement contenant des corps en matière dure, et un élément de fixation cylindrique creux (22) présentant une forme tronconique sur son côté tourné vers les éléments déflecteurs (9, 9', 9"), et **en ce que** le revêtement contenant des corps en matière dure est conformé en couche de métal dur contenant des grains de diamant et/ou des particules céramiques.

2. Outil frontal (1) selon la revendication 1, **caractérisé en ce que** l'élément de fixation (22) est en prise au moins partiellement par complémentarité de formes avec les éléments déflecteurs (9).

3. Outil frontal (1) selon une des revendications 1 ou 2, **caractérisé en ce que** la au moins une paire d'éléments déflecteurs (9) est disposée sur le côté de l'outil frontal (1) tourné vers le sol.

4. Outil frontal (1) selon la revendication 3, **caractérisé en ce que** le au moins un dispositif de coupe (5) est disposé sur l'outil frontal (1) dans un plan sensiblement horizontal, devant le dispositif de convoyage (4, 7).

5. Outil frontal (1) selon une des revendications 1 ou 4, **caractérisé en ce que** le dispositif de coupe (5) est disposé sur l'outil frontal (1) à rotation autour d'un axe horizontal.

6. Outil frontal (1) selon la revendication 1, **caractérisé en ce qu'**un second dispositif de coupe (14) est disposé sur l'outil frontal (1) dans une position inclinée selon un angle par rapport au plan de coupe du premier dispositif de coupe (5) et située derrière le dispositif de convoyage.

7. Outil frontal (1) selon la revendication 6, **caractérisé en ce que** le second dispositif de coupe (14) comprend plusieurs plans parallèles entre eux, au moyen desquels au moins un élément porteur à défilement continu (8) peut être guidé et commandé par l'intermédiaire de plusieurs éléments déflecteurs (9) disposés par paires dans un plan.
